(19) Europäisches Patentamt
European Patent Office
Office européen des brevets

(11) Publication number: **0 501 061 A1**

## (12) EUROPEAN PATENT APPLICATION

(21) Application number: **91308017.2**

(22) Date of filing: **02.09.91**

(51) Int. Cl.5: **F17C 13/00**, F17C 3/08, F16L 59/02

(30) Priority: **21.02.91 US 659016**

(43) Date of publication of application:
**02.09.92 Bulletin 92/36**

(84) Designated Contracting States:
**BE DE DK ES FR GB IT NL SE**

(71) Applicant: **Minnesota Valley Engineering, Inc.**
**407 Seventh Street N.W.**
**New Prague Minnesota 56071(US)**

(72) Inventor: **Lutgen, Michael H.**
**24306 E. Cedar Lake Drive**
**New Prague, Minnesota 56071(US)**

(74) Representative: **Allman, Peter John et al**
**MARKS & CLERK Suite 301 Sunlight House**
**Ouay Street**
**Manchester M3 3JY(GB)**

(54) Improved thermal insulation for cryogenic vessels.

(57) The composite insulating material and can be used to insulate the internal storage vessel of a cryogenic storage container consists of a first stratum of super insulation and a second stratum of non-compacted fiberglass. The combination of super insulation and non-compacted fiberglass results in a composite insulating material that has insulation characteristics comparable to that of super insulation for very high vacuums, yet has much better insulating characteristics in the poorer vacuum range.

EP 0 501 061 A1

## Background Of The Invention

The invention relates, generally, to an improved composite thermal insulation for preventing conductive and radiant heat transfer and, more particularly, to such thermal insulation for cryogenic liquid storage containers.

The typical cryogenic storage container consists of a cylindrically shaped inner storage vessel holding, for example, liquid nitrogen, CO2 or other cryogen. A relatively thin outer shell is spaced from and surrounds the inner storage vessel to form an insulation chamber therebetween. A vacuum is created in the insulation chamber and thermal insulating material fills the evacuated chamber to prevent radiant and conductive heat transfer between the external environment and the inner storage vessel.

Perlite is one type of thermal insulating material used for this purpose and consists of a granular, heat expanded, natural volcanic glass that can be used to fill the evacuated insulation chamber space. A problem with perlite as insulation in cryogenic systems is that it will compress and settle over time such that insulation will be lost from the upper sections of the storage vessel. Because the vessel is not uniformly insulated over its entire surface, the influx of heat from the external environment is accelerated. As a result, it is necessary when using perlite insulation to periodically open the evacuated insulation chamber, replace the perlite that has settled and reestablish the vacuum. This procedure is expensive and time consuming.

An alternative to perlite insulation is fiber glass sheeting wrapped around the storage vessel. In order for the fiberglass to insulate as well as perlite, it is necessary to increase the density of the fiberglass by compacting it. As a result, fiberglass that is normally two pounds per cubic foot is packed to approximately ten to twelve pounds per cubic foot before being installed in the insulation chamber. While the packed fiberglass performs on a par with perlite, it is difficult and expensive to manufacture and install.

A third alternative form of insulation is known as super insulation. The term super insulation encompasses a variety of systems, the specific constructions which are known. One such super insulation system consists of layers of low heat conductive material alternated with layers of a radiation barrier. The radiation barrier typically consists of thin sheets of reflective foil such as aluminum foil or aluminum coated plastic film. The foils are extremely thin, on the order of .2 millimeters to .002 millimeters. The low heat conductive material consists of sheets of finely spun fibers compressed into a mat or of foam. While such super insulation can be effective at preventing the transfer of heat energy, it is necessary to use at least 40 and up to 250 layers of material. As a result, super insulation is very expensive to use and time consuming to install. Moreover, for best performance super insulation requires a very good quality vacuum in the evacuated insulation chamber. For example, the absolute pressure within the evacuated chamber must be maintained at a value 10 to 100 times lower than is necessary with a perlite insulating system. This low vacuum is difficult and expensive to obtain and maintain.

An insulating material for use with cryogenic vessel that substantially retards the transfer of heat between the external environment and the stored liquid yet is inexpensive to install and maintain and which does not require stringent vacuum requirements is desired.

## Objects Of The Invention

It is a general object of the invention to provide an improved thermal insulating material suitable for use in cryogenic vessels.

It is a further object of the invention is to provide an insulating material that is relatively inexpensive to manufacture, install and maintain.

It is yet another object of the invention to provide a thermal insulating material that provides good thermal insulation over a wide range of vacuum conditions.

Other objects of the invention, in addition to those set forth above, will become apparent to one of ordinary skill in the art from the following detailed description of the invention.

## Summary Of The Invention

The present invention overcomes the above-noted shortcomings of the prior art and provides a composite insulation material that combines super insulation and non-compacted fiberglass. The composite insulating material as used in cryogenic vessels consists preferably of one to ten layers of super insulation disposed adjacent to the internal vessel, surrounded by non-compacted fiberglass. However, other arrangements of the non-compacted fiberglass and super insulation may be used. The combination of super insulation and non-compacted fiberglass results in a composite insulating material that has insulation characteristics comparable to that of super insulation for very high vacuums, yet has much better insulating characteristics in the poorer vacuum range. Moreover, the composite insulating material of the present invention has better insulating characteristics than either compacted fiberglass alone or perlite alone over a wider vacuum range. In addition to these superior insulating characteristics, the insulating material of the present invention is less expensive to install, manufacture and maintain than the insulation of the prior art. Because the fiberglass in the present invention does not need to be compacted, the expensive packing operations of the prior art can be eliminated. Moreover, since in a preferred embodiment only 10 layers of super insulation are used, this system is relatively inexpensive when compared with a system using only super insulation. Finally, the system of the present invention avoids the problems of settling associated with the use of granular insulating material such as perlite.

Brief Description Of The Drawings

Figure 1 shows a partial cut-away view of a cryogenic liquid storage vessel.

Figure 2 shows a side view of a preferred embodiment of the composite insulating material of the invention.

Figure 3 shows a graph of the insulating characteristics of the invention as compared to the insulating characteristics of the prior art.

Detailed Description Of The Invention

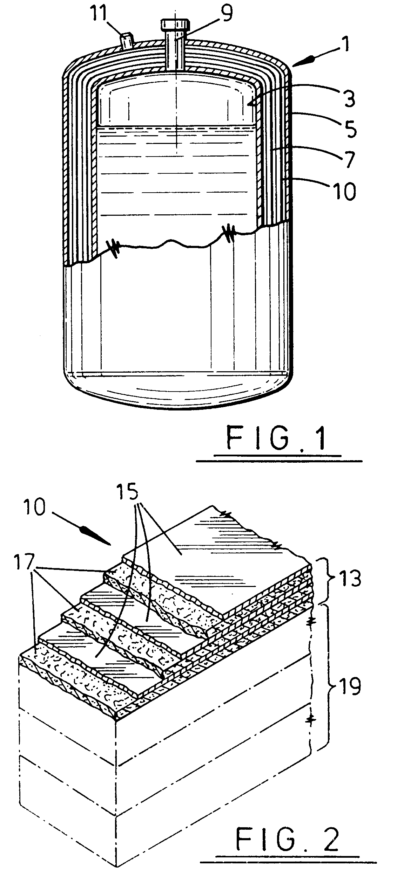

Referring more particularly to the drawings, Figure 1 shows a cryogenic storage container 1. Storage container 1 consists of an inner, generally cylindrically shaped vessel 3 for receiving fluid such as liquid nitrogen, argon or CO2. Surrounding the inner vessel 3 is an outer shell 5 spaced therefrom to create an insulating chamber 7. A filler tube 9 connects the inner vessel 3 with the external environment such that the liquid hydrogen or nitrogen can be dispensed from the inner vessel 3. A vacuum valve 11 is provided to evacuate the insulating chamber 7. The vacuum is necessary to minimize the air in the insulating chamber 7 which would otherwise conduct heat between the inner vessel 3 and the external environment.

The preferred embodiment of the composite insulation of the invention 10 is shown located in the evacuated insulating chamber 7 in Figure 1. As best shown in Figure 2, the composite insulation 10 consists, preferably, of a first stratum of super insulation 13. This stratum of super insulation consists, preferably, of approximately one to ten layers of super insulation placed adjacent the interior container of the cryogenic vessel. However, up to 80 layers of super insulation can be used while retaining the benefits of the composite insulation of the invention. Each layer of the super insulation 13 consists of alternating layers of reflective material 15, such as aluminum foil, for preventing radiant heat transfer and layers of compressed mats of fiber 17 for preventing conductive heat transfer.

The remaining space of the evacuated chamber is filled by a second stratum of non-compacted fiberglass 19. In a preferred embodiment the fiberglass has a fiber diameter in the range of .75 to 3.8 microns, a phenolic resin binder which is approximately 10% by weight, and a density of approximately .8 to three pounds per cubic foot in a non-compacted condition. While a preferred composition of the fiberglass has been described, any non-compacted fiberglass providing the required level of performance can be used. Thus, the need in the prior art to compact the fiberglass 19 before it is placed in the evacuated chamber is eliminated.

While a preferred embodiment of the invention has been disclosed with specific reference to Figure 2, it will be understood that variations in the arrangement and composition of the super insulation and non-compacted fiberglass can be made without departing from the invention. For example, in the super insulation shown in Figure 2 the aluminum foil could be replaced by aluminized mylar with spacer paper as manufactured by King-Sealy. Alternatively, the super insulation could consist of crinkled metalized plastic film such as dimpled aluminized mylar manufactured by King-Sealy.

Moreover, the arrangement of the super insulation and fiberglass could be varied from that shown in Figure 2. For example, the fiberglass could be disposed adjacent to the interior container with the super insulation surrounding the fiberglass. Alternatively, layers of non-compacted fiberglass could be arranged between the layers of super insulation.

As is evident from the foregoing description, the composite insulating material of the invention 10 requires a minimum amount of super insulation and does not require compacted fiberglass. As a result, the composite insulating material 10 is very inexpensive to manufacture. Moreover, because the composite insulating material 10 does not utilize granular insulating material such as perlite, the problems associated with the settling and compacting of granulated material are avoided. Finally, when used in a cryogenic vessel, the insulation 10 does not require the strict vacuum requirements associated with super insulation.

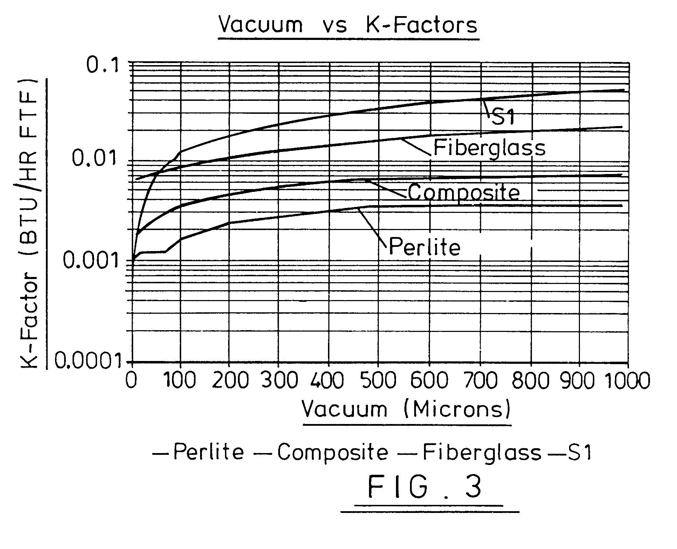

Referring more particularly to Figure 3, comparative test data of the insulating characteristics of the composite insulating material 10 are shown graphically in comparison with the insulating characteristics of super insulation, compressed fiberglass and perlite. The results of this test data is tabulated below.

| VACUUMS VS. K-FACTORS | | | | |
|---|---|---|---|---|
| VACUUM PRESSURES (MICRONS) | K-FACTORS (BTU/HR FT F) | | | |
| | COMPOSITE | SI | PERLITE | FIBERGLASS |
| 8 | 0.0016 | 0.0012 | 0.0011 | 0.0070 |
| 50 | 0.0030 | 0.0070 | 0.0012 | 0.0078 |
| 100 | 0.0036 | 0.0130 | 0.0016 | 0.0088 |
| 250 | 0.0050 | 0.0220 | 0.0025 | 0.0115 |
| 500 | 0.0068 | 0.0340 | 0.0033 | 0.0160 |
| 750 | 0.0069 | 0.0430 | 0.0034 | 0.0190 |
| 1000 | 0.0072 | 0.0520 | 0.0035 | 0.0230 |

The graph of Figure 3 shows the heat transferred, Kt, for a range of vacuum conditions for the composite insulation of the invention, super insulation, perlite and compressed fiberglass where Kt are presented on a logarithmic scale. The insulating curve of the present invention is shown by the solid line labeled Composite. As is evident from this graph, the curve of the insulating characteristics of the invention 10 is relatively flat such that good insulation is provided over a relatively wide range of vacuum. The insulating characteristics of the invention for good vacuum approaches that of super insulation, as shown by the line labelled SI. Moreover, the insulating characteristics of the invention are better than that for compressed fiberglass, shown by line labeled Fiberglass, and are comparable to perlite, shown by line labeled Perlite, over a wide range of vacuums. As it is evident from this graph, the composite insulating material of the invention offers superior insulating characteristics when compared with those of the prior art, while being less expensive to manufacture, install and maintain.

While the preferred embodiment of this invention has been shown and described in some detail, it is to be understood by one of ordinary skill in the art that this description and the accompanying drawings are offered merely by way of example, and that the invention is to be limited in scope only by the appended claims.

**Claims**

1. A composite thermal insulating material for preventing the transfer of radiant and conductive heat comprising:

    a first stratum of material consisting of super insulation; and

    a second stratum of material consisting of non-compressed fiberglass.

2. The thermal insulating material according to claim 1, wherein said fiberglass has a density of approximately .8 to 3 pounds per cubic foot.

3. The thermal insulating material according to claim 1, wherein said stratum of super insulation consists of plurality of alternating layers of radiant heat reflecting elements and non-conductive heat elements.

4. The thermal insulating material according to claim 3, wherein said radiant heat reflecting elements consist of metal foil.

5. The thermal insulating material according to claim 3, wherein said radiant heat reflecting elements consist of metalized plastic film.

6. The thermal insulating material according to claim 3, wherein said radiant reflecting elements consist of aluminized mylar.

7. The thermal insulating material according to claim 1, wherein said super insulation comprises dimpled aluminized mylar.

8. The thermal insulating material according to claim 3, wherein said non-conductive heat elements consist of a mat of fiberous material.

9. The thermal insulating material according to claim 1, wherein said super insulation consists of one to ten layers.

10. The thermal insulating material according to claim 1, wherein said super insulation consists of up to 80 layers.

11. The thermal insulating material according to claim 1, wherein said first and second stratums of material surround a cryogenic vessel to prevent the transfer of radiant and conductive heat to said vessel.

12. An insulated cryogenic storage vessel comprising:
    a) a storage vessel;
    b) means surrounding said storage vessel to create an insulating chamber therebetween; and
    c) insulation arranged in said insulating chamber consisting of a first stratum of material consisting of super insulation and a second stratum of material consisting of non-compressed fiberglass.

13. The vessel of claim 12, wherein said stratum of super insulation is located adjacent said storage vessel.

14. The vessel of claim 12, wherein said stratum of fiberglass is located adjacent said storage vessel.

15. The vessel according to claim 12, wherein said fiber glass has a density of approximately .8 to 3 pounds per cubic foot.

16. The vessel according to claim 12, wherein said stratum of super insulation consists of plurality of alternating layers of radiant heat reflecting elements and non-conductive heat elements.

17. The vessel according to claim 16, wherein said radiant heat reflecting elements consist of metal foil.

18. The vessel insulating material according to claim 16, wherein said radiant heat reflecting elements consist of metalized plastic film.

19. The vessel according to claim 16, wherein said radiant reflecting elements consist of aluminized mylar.

20. The vessel according to claim 12, wherein said super insulation comprises dimpled aluminized mylar.

21. The vessel according to claim 16, wherein said non-conductive heat elements consist of a mat of fiberous material.

22. The vessel according to claim 12, wherein said super insulation consists of one to ten layers of material.

23. The vessel according to claim 12, wherein said super insulation consist of up to 80 layers.

24. The vessel of claim 12, further including means for evacuating said insulating chamber.

FIG.1

FIG.2

Vacuum vs K-Factors

FIG. 3

EP 0 501 061 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 379 330 (P.J.PERKINS ET AL.) <br><br> * column 1, line 13 - line 30 * <br> * column 2, line 37 - column 4, line 3 * <br> * figures 3,4 * | 1,3,5,6, 9,11 | F17C13/00 <br> F17C3/08 <br> F16L59/02 |
| A | | 12,14, 16,18, 19,22,24 | |
| | --- | | |
| X | US-A-3 346 016 (JOHNS-MANVILLE CORPORATION) <br> * column 1, line 9 - line 11 * <br> * column 3, line 8 - line 45 * <br> * column 4, line 11 - line 30 * <br> * column 4, line 63 - column 5, line 48 * <br> * figure * | 1-4,8,9 | |
| Y | | 11-13, 15-17, 21-22,24 | |
| | --- | | |
| Y | US-A-3 390 703 (RYAN INDUSTRIES, INC.) <br><br><br> * column 1, line 9 - line 20 * <br> * column 2, line 3 - column 3, line 19 * <br> * column 4, line 20 - line 34 * <br> * figure * | 11-13, 15-17, 21,22,24 | TECHNICAL FIELDS SEARCHED (Int. Cl.5 ) <br><br> F17C <br> F16L |
| A | | 1,3-5, 8-10,18, 23 | |
| | --- | | |
| A | ADVANCES IN CRYOGENIC ENGINEERING , R.W.FAST (ED.) <br> vol. 33, 1988, NEW YORK US <br> pages 313 - 322; <br> H.BURMEISTER ET AL.: 'TEST OF MULTILAYER INSULATIONS FOR THE USE IN THE SUPERCONDUCTING PROTON-RING OF HERA' <br> * the whole document * | 1,3-13, 16-24 | |
| | --- | | |
| | -/-- | | |

The present search report has been drawn up for all claims

| Place of search | Date of completion of the search | Examiner |
|---|---|---|
| THE HAGUE | 02 JUNE 1992 | STEVNSBORG N. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-2 776 776 (GENERAL ELECTRIC COMPANY)<br><br>* column 1, line 15 - line 19 *<br>* column 1, line 58 - column 2, line 59 *<br>* figure *<br>--- | 1,2,<br>11-15 | |
| A | EP-A-0 090 334 (UNION CARBIDE CORPORATION)<br><br>* abstract *<br>* page 8, last paragraph - page 12, paragraph 2 *<br>* figures 1-3 * | 1,2,11,<br>12,14,<br>15,24 | |

TECHNICAL FIELDS
SEARCHED (Int. Cl.5 )

The present search report has been drawn up for all claims

| Place of search | Date of completion of the search | Examiner |
|---|---|---|
| THE HAGUE | 02 JUNE 1992 | STEVNSBORG N. |

EPO FORM 1503 03.82 (P0401)